# EUROPÄISCHE PATENTSCHRIFT

(11) **EP 3 865 831 B1**
(45) Veröffentlichungstag und Bekanntmachung des Hinweises auf die Patenterteilung: **20.03.2024**
(21) Anmeldenummer: 21156481.0
(22) Anmeldetag: 11.02.2021
(51) Int. Cl.: G01F 23/74, G01F 11/12

(54) **SAUGLANZE**
SUCTION LANCE
LANCE D'ASPIRATION

(30) Priorität: 13.02.2020 DE 102020103781; 22.05.2020 DE 102020113828
(43) Veröffentlichungstag der Anmeldung: 18.08.2021
(73) Patentinhaber: Herbert Saier GmbH, 79194 Gundelfingen (DE)
(72) Erfinder: Saier, Michael, 79117 Freiburg / Kappel (DE)
(74) Vertreter: Roche, von Westernhagen & Ehresmann

(56) Entgegenhaltungen:
- CN-U- 201 463 991
- DE-A1-102018 110 155
- DE-B1- 1 655 517
- FR-A1- 2 503 861
- FR-A1- 2 534 375
- US-A- 4 342 224

## Beschreibung

Die Erfindung betrifft eine Sauglanze zur Entnahme eines flüssigen Mediums aus einem Behältnis.

Die Anmelder und die mit den Anmeldern verbundene Herbert Saier GmbH, Gewerbestrasse 71, 79194 Gundelfingen und die Saier Dosiertechnik GmbH, Gewerbestrasse 71, 79194 Gundelfingen, entwickeln und vertreiben seit Jahrzehnten Sauglanzen dieser Art. Mithilfe einer Sauglanze kann aus einem Behältnis, z. B. einem Kanister oder aus einen anderem geeigneten Gebinde, eine Flüssigkeit, z. B. eine Chemikalie, die in einem Reinigungs- oder Waschprozess verwendet wird, entnommen und unter Zuhilfenahme einer Dosiereinrichtung einem Zielgerät, z. B. einer Waschmaschine oder einer Geschirrspülmaschine, dosiert zugeführt werden.

Die Dosiereinrichtung umfasst eine Pumpe, die in einer Saugleitung einen Unterdruck generiert und auf diese Weise die Flüssigkeit aus dem Behältnis heraussaugt.

Um das Behältnis restentleeren zu können, wird die Sauglanze mit ihrem Fuß auf den Boden des Behältnisses aufgesetzt oder an diesen nahe herangebracht. Ein Sauglanzenkopf kann aus dem Behältnis herausragen. Die Sauglanze ist mit der Dosiereinrichtung über eine Saugleitung verbunden.

Die Erfindung bezieht sich auf Sauglanzen, die einen Schwimmerkörper aufweisen. Der Schwimmerkörper ist zumindest entlang eines Teilbereiches einer axialen Erstreckung zwischen Sauglanzenfuß und Sauglanzenkopf verlagerbar oder verfahrbar angeordnet. Der Schwimmer schwimmt auf dem flüssigen Medium auf und kann auf diese

Weise den Füllstand anzeigen. Dem Schwimmer kann eine Einrichtung zugeordnet sein, z. B. ein Magnet, der in unterschiedlichen Axialpositionen des Schwimmers unterschiedliche Schalter betätigt. Hierzu kann an der Sauglanze eine Messelektronik angeordnet sein. Die Messelektronik kann über eine elektrische Verbindungsleitung mit der Dosiereinrichtung, insbesondere mit einer Steuerung der Dosiereinrichtung, verbunden sein.

Eine von den Anmeldern entwickelte Sauglanze ist in der DE 10 2018 106 045 A1 beschrieben. Hier ist bereits erwähnt, dass innerhalb des rohrförmigen Körpers eine Messelektronik untergebracht sein kann.

Aus der DE 10 2018 110 155 A1 geht eine von den Anmeldern entwickelte Sauglanze hervor, die mit einer radial aufweitbaren Klemmvorrichtung operiert. Hier ist eine punktförmige Befestigung der die Saugleitung umfassenden Baueinheit über zwei radial aufweitbare Klemmvorrichtungen im Bereich des Sauglanzenkopfes und dem Bereich des Sauglanzenfußes vorgesehen.

Aus der FR 2 534 375 A1 geht eine Sauglanze hervor, bei der ein Saugrohr und eine Platine mit einem Schwimmerkörper umgeben sind, wobei die gesamte Anordnung in einem rohrförmigen Körper angeordnet ist. Die Befestigung des Saugrohrs an dem rohrförmigen Körper erfolgt nur im Bereich des Kopfes und des Fußes der Sauglanze.

Aus der CN 201 463 991 U geht eine Vorrichtung zur Entnahme von Benzin aus einem Fahrzeugtank hervor. Hier ist eine Rohranordnung mit einer Vielzahl von Rohren vorgesehen, wobei an einem Holkörperprofil dieser Rohranordnung ein Schwimmerkörper axial verschiebbar gelagert ist.

In der deutschen Patentanmeldung DE 10 2019 131 381 A1, die nachveröffentlicht ist, ist bereits eine auf die Anmelder zurückgehende Sauglanze beschrieben, die einen Schwimmerkörper aufweist, der außenseitig von einem Rohrkörper umgeben ist. Der Rohrkörper kann für eine geschützte Unterbringung des Schwimmerkörpers sorgen, so dass insbesondere, wenn die Sauglanze durch eine enge Öffnung im Deckel oder Kopfbereich des Behältnisses in das Behältnis eingesetzt oder durch diese Öffnung herausgenommen wird, eine Beschädigung des Schwimmers sicher verhindert wird.

In der nachveröffentlichten Patentanmeldung ist beschrieben, dass eine Verlagerungsbewegung des Schwimmerkörpers in Axialrichtung über einen wesentlichen oder über einen vollständigen oder einen nahezu vollständigen Teil der gesamten Füllhöhe des Behältnisses zugelassen sein kann.

Bei dieser Ausführungsform ist die Sauglanze also in Axialrichtung derartig langgestreckt, dass sie der Höhe des Behältnisses entspricht, bzw. diese übersteigt. Sowohl das Außenrohr als auch ein innerhalb des Außenrohres angeordnetes Hohlprofil, welches eine Messelektronik aufnimmt und eine Saugleitung bereitstellt, sind entsprechend langgestreckt ausgebildet, um eine über die gesamte axiale Erstreckung der Sauglanze gewünschte Verlagerungsbewegung des Schwimmerkörpers zu ermöglichen. Um die Verlagerungsbewegung des Schwimmerkörpers entlang der Axialstrecke nicht zu beeinträchtigen, ist das Hohlprofil im Bereich des Sauglanzenkopfes und im Bereich des Sauglanzenfußes mit dem Außenrohr, dem sogenannten rohrförmigen Körper oder Rohrkörper, verbunden.

Je nach konkreter Ausbildung der Sauglanze kann aufgrund von Verformung, z. B. Verbiegung, aber auch aufgrund von Toleranzen bei der Fertigung der vorgesehenen Spaltmaße eine Verlagerungsbewegung des Schwimmerkörpers beeinträchtigt werden.

Der Erfindung liegt ausgehend von einer durch die Anmelder bekannt gewordene, druckschriftlich nicht belegbare Sauglanze, die Aufgabe zugrunde, eine Sauglanze bereitzustellen, die eine Fertigung und sichere Handhabung auch von axial sehr langgestreckten Sauglanzen ermöglicht und die auch axiale Verfahrbewegungen des Schwimmerkörpers entlang großer axialer Distanzen zulässt und dauerhaft sicher gewährleistet.

Die Erfindung löst diese Aufgabe mit den Merkmalen des Anspruches 1.

Das Prinzip der Erfindung besteht im wesentlichen darin, dass die erfindungsgemäße Sauglanze einen Rohrkörper, einen Schwimmerkörper und ein Hohlprofil aufweist. Der Rohrkörper erstreckt sich in Axialrichtung zwischen dem Sauglanzenfuß und dem Sauglanzenkopf. Insbesondere erstreckt sich der Rohrkörper entlang der gesamten oder nahezu der gesamten axialen Erstreckung der Sauglanze zwischen Sauglanzenfuß und Sauglanzenkopf in Axialrichtung.

Der Rohrkörper kann kreiszylindrisch oder im wesentlichen kreiszylindrisch ausgebildet sein. Er kann auch eine andere Querschnittsform, z. B. eine Dreiecksform oder eine beliebige, z. B. Polygonzug-Querschnittsform aufweisen.

In dem Innenraum des Rohrkörpers sind ein Schwimmerkörper und ein Hohlprofil angeordnet. Der Schwimmerkörper ist funktional insbesondere ähnlich ausgebildet, wie in der eingangs beschriebenen deutschen Patentanmeldung DE 10 2019 131 381 A1 beschrieben. Darüber hinaus ist ein Hohlprofil vorgesehen. Dieses kann eine oder mehrere Kammern aufweisen. Insbesondere weist das erfindungsgemäße Hohlprofil wenigstens eine erste Kammer auf, die der Unterbringung einer Messelektronik dient, insbesondere der Anordnung einer Platine, und wenigstens eine zweite Kammer, die die Saugleitung ausbildet.

Die Besonderheit besteht darin, dass das Hohlprofil mittels einer Verriegelungseinrichtung an dem Rohrkörper befestigt ist. Die Verriegelungseinrichtung ist gemäß der Erfindung linienartig ausgebildet und erstreckt sich in Axialrichtung.

Eine linienartige Ausbildung der Verriegelungseinrichtung im Sinne der vorliegenden Patentanmeldung bedeutet insbesondere, dass entlang der axialen Erstreckung der Sauglanze eine Vielzahl von Befestigungspunkten oder Befestigungsflächen vorgesehen ist, die das Hohlprofil und den Rohrkörper miteinander verriegeln.

Die Verriegelungseinrichtung ist gemäß der Erfindung also in Axialrichtung kontinuierlich oder quasi kontinuierlich ausgebildet.

Diese linienartige Ausbildung der Verriegelungseinrichtung unterscheidet sich insbesondere von einer Verriegelungseinrichtung, wie sie in der DE 10 2018 110 155 A1 beschrieben ist, bei der nur eine punktförmige Verriegelung im Bereich des Sauglanzenkopfes und eine punkförmige Verriegelung im Bereich des Sauglanzenfußes vorgenommen worden ist.

Durch diese Ausbildung der Verriegelungseinrichtung in einer Linienform kann ein Kraftschluss entlang eines Großteils der axialen Erstreckung der Sauglanze erreicht werden.

Bei einer Ausführungsform der Erfindung kann die linienartig ausgebildete Verriegelungseinrichtung beispielsweise einen Fortsatz mit einem Verbreiterungsabschnitt und eine formkomplementäre Aufnahme aufweisen. Der Fortsatz kann an einem der beiden Elemente, z. B. an dem Rohrkörper, und die Aufnahme kann an dem jeweils anderen der beiden Elemente, z. B. an dem Hohlprofil, angeordnet sein.

Fortsatz und Aufnahme stellen insoweit die Verriegelungselemente der Verriegelungseinrichtung dar.

Fortsatz und Aufnahme können sich ebenfalls entlang der axialen Erstreckung der Sauglanze, vorteilhaft entlang der gesamten axialen Länge der Sauglanze oder einem Großteil der axialen Länge der Sauglanze erstrecken.

Vorteilhaft ist das Hohlprofil infolge einer axialen Steck- oder Schiebebewegung formschlüssig an dem Rohrkörper festlegbar. Von der Erfindung ist also insbesondere umfasst, wenn der Rohrkörper und das Hohlprofil zunächst gesondert voneinander hergestellt werden, und damit gesonderte Bauelemente bereitstellen, und nachfolgend durch eine axiale Steck- oder Einsetzbewegung aneinander festgelegt werden können. Die Verriegelung kann eine lösbare oder eine unlösbare Verriegelung bewirken.

Das Hohlprofil kann also zur Festlegung an dem Rohrkörper einfach in Axialrichtung durch eine relative Steckbewegung oder durch eine Schiebebewegung an dem Rohrkörper festgelegt werden.

Die Verriegelungseinrichtung ist linienartig ausgebildet. Dies bedeutet, dass eine Mehrzahl oder eine Vielzahl von Befestigungspunkten oder auch eine durchgehende Befestigungsfläche vorgesehen ist, die sich in Axialrichtung der Sauglanze erstreckt.

Anders, als in der deutschen Patentanmeldung DE 10 2019 131 381 A1 der Anmelder beschrieben, erfolgt nun eine Befestigung des Hohlprofils an dem Rohrkörper nicht mehr an nur an zwei Punkten, am oberen und am unteren Ende des Hohlprofils, sondern entlang einer Linie.

Damit wird einerseits für eine einfache und sichere Montage gesorgt. Zum anderen ist der Bewegungsraum zur Unterbringung des Schwimmerkörpers entlang der axialen Erstreckung der Sauglanze besser definierbar und vorherbestimmbar. Auch bei einer Verbiegung oder Krümmung der Sauglanze bleibt der Bewegungsraum für den Schwimmerkörper, der sich zwischen der Außenumfangsfläche des Hohlkörpers und der Innenumfangsfläche des Rohrkörpers befindet, in seiner Dimension unbeeinträchtigt. Der Schwimmerkörper kann also unbeeinträchtigt verfahren.

Angemerkt sei an dieser Stelle, dass der Bewegungsraum für den Schwimmerkörper vorteilhafterweise nach unten hin und auch nach oben hin offen ausgebildet ist, so dass innerhalb des Bewegungsraums - bei in das Medium eingetauchtem Zustand der Sauglanze - der Schwimmerkörper immer auf der Oberfläche des Mediums aufschwimmen kann, und sich der Schwimmer mit zunehmendem oder abnehmenden Füllstand des Mediums bewegen kann.

Gemäß der Erfindung ist vorgesehen, dass die Verriegelungseinrichtung sich zumindest entlang eines Teils der axialen Länge der Sauglanze unterbrochen oder ununterbrochen erstreckt.

Von der Erfindung ist umfasst, wenn an dem Rohrkörper eines oder mehrere Hohlprofile festgelegt sind.

Von der Erfindung ist auch umfasst, wenn das Hohlprofil an dem Rohrkörper mittels einer linienartig ausgebildeten oder mittels mehrerer linienartig ausgebildeter Verriegelungseinrichtungen festgelegt ist.

Von der Erfindung ist weiter auch umfasst, wenn das Hohlprofil mittels einer linienartig ausgebildeten Verriegelungseinrichtung und mittels einer zusätzlichen Verriegelungseinrichtung an dem Rohrkörper befestigt ist.

Die Erfindung bezieht sich auf eine Sauglanze nach Anspruch 1. Die erfindungsgemäße Sauglanze dient vornehmlich der Entnahme eines flüssigen Mediums aus einem Behältnis. Die Erfindung bezieht sich aber gleichermaßen auch auf Sauglanzen, mit denen flüssige Medien in das Behältnis hinein förderbar sind. Eine Sauglanze im Sinne der vorliegenden Patentanmeldung kann insoweit unidirektional oder auch bidirektional betrieben werden.

In der Regel wird mit der erfindungsgemäßen Sauglanze Medium nur aus dem Behältnis entnommen. Gleichermaßen kann mit demselben anspruchsgemäßen Gegenstand das Medium aber auch von einem anderen Behältnis in das Behältnis gefördert werden. Dieser Gegenstand wird fachmännisch auch als Förderlanze bezeichnet. Zur Klarstellung sei insoweit angemerkt, dass die Erfindung nach Anspruch 1 mit ihrem Begriff Sauglanze auch Förderlanzen umfasst.

Die erfindungsgemäße Sauglanze ist in einem Dosiersystem einsetzbar, das eine Dosiereinrichtung aufweist. Zur Vermeidung von Wiederholungen wird auf die nachfolgenden Patentanmeldungen der Anmelder verwiesen: DE 10 2019 109 793 A1, DE 10 2015 107 976 A1, DE 10 2015 107 105 A1, DE 3 091 114 A1, DE 10 2017 107 214 A1, DE 10 2017 114 767 A1, DE 10 2016 102 829 A1, DE 10 2015 122 565 A1, DE 10 2014 010 126 A1, DE 10 2018 122 651 A1, DE 10 2016 125 928 A1, DE 10 2011 108 396 A1, DE 10 2011 119 021 A1, DE 10 2015 110 862 A1, DE 10 2018 117 669 A1, DE 10 2016 121 383 A1, DE 10 2017 103 168 A1, DE 10 2018 113644A1, DE 102017 114 665 A1, DE 10 2012 012 913 A1.

Wie eingangs beschrieben, sind von der Erfindung insbesondere Sauglanzen mit Verriegelungseinrichtungen umfasst, die eine Verriegelung von zwei zunächst gesondert gefertigten Elementen, nämlich von Rohrkörper und Hohlprofil, aneinander ermöglichen. Von der Erfindung ist aber auch umfasst, wenn der Rohrkörper und das Hohlprofil einstückig stoffschlüssig miteinander verbunden sind, und in einem Zug gemeinsam hergestellt werden.

Gemäß einer vorteilhaften Ausgestaltung der Erfindung ist das Hohlprofil infolge einer axialen Steck- oder Schiebebewegung formschlüssig an dem Rohrkörper festlegbar. Dies ermöglicht eine besonders einfache und vorteilhafte Montage der erfindungsgemäßen Sauglanze. Insbesondere kann die Montage bei dieser Ausführungsform auch automatisiert oder teilautomatisiert erfolgen.

Gemäß einer weiteren vorteilhaften Ausgestaltung der Erfindung weist die Verriegelungseinrichtung wenigstens einen Fortsatz mit einem Verbreiterungsabschnitt auf und wenigstens eine zu dem Fortsatz formkomplementäre Aufnahme auf.

Anders ausgedrückt, weist wenigstens eines der beiden Elemente, Rohrkörper oder Hohlprofil, eine Hinterschneidung auf, die mit einer entsprechenden Haltefläche an dem jeweils anderen der beiden Elemente, Hohlprofil oder Rohrkörper, in Eingriff bringbar ist. Die beiden Elemente (Hohlprofil und Rohrkörper) sind durch eine Axialbewegung relativ zueinander miteinander in Eingriff bringbar aber entlang einer Bewegungsrichtung quer zu der Axialrichtung nicht voneinander lösbar, sondern unverlierbar aneinander gehalten.

Der Verbreitungsabschnitt kann kontinuierlich oder diskontinuierlich ausgebildete Verbreiterungsflächen aufweisen.

Der Begriff "formkomplementär" umfasst insbesondere, dass eine Verlierbarkeit im Gebrauchszustand der beiden miteinander verhakten oder miteinander verklemmten Elemente (Hohlprofil und Rohrkörper) entlang einer Richtung quer zur Axialrichtung verhindert wird.

Gemäß einer vorteilhaften Ausgestaltung der Erfindung ist die Aufnahme an dem Rohrkörper angeordnet. Bei dieser Variante ist vorgesehen, dass der Fortsatz an dem Hohlprofil angeordnet ist.

Gemäß einer weiteren vorteilhaften Ausgestaltung der Erfindung ist vorgesehen, dass die Aufnahme an dem Hohlprofil angeordnet ist. Bei dieser Variante ist vorgesehen, dass der Fortsatz an dem Rohrkörper angeordnet ist.

Gemäß einer weiteren vorteilhaften Ausgestaltung der Erfindung ist vorgesehen, dass der Schwimmerkörper zumindest bereichsweise hufeisenartig ausgebildet ist. Die Hufeisenform beschreibt insoweit eine U-förmige oder einem U angenäherte Form.

Diese Ausbildung berücksichtigt eine Querschnittsgeometrie der Sauglanze derart, dass der zur Verfügung stehende Bewegungsraum für den Schwimmerkörper zwischen der Innenumfangsfläche des Rohrkörpers und der Außenumfangsfläche des Hohlprofils ebenfalls im wesentlichen U-förmig oder hufeisenförmig ausgebildet ist. Der Schwimmer kann also hier eine maximale Fläche einnehmen.

Für den Fall, dass an dem Rohrkörper mehrere Hohlprofile festgelegt sind, kann die Form des Schwimmers von einer Hufeisenform auch abweichen. Er kann z. B. auch nur bereichsweise hufeisenförmig ausgebildet sein:
Bei dieser Variante weist der Schwimmerkörper z. B. eine an eine Kleeblattform angenäherte auf, also beispielsweise die Form eines dreiblättrigen oder vierblättrigen Kleeblatts, wobei die Zahl der Blätter der Zahl der an dem Rohrkörper festgelegten Hohlprofile entspricht. Dabei dringt der Schwimmerkörper jeweils mit einem lappenförmigen Bereich in den Raum zwischen zwei Hohlprofilen hinein.

Gemäß einer weiteren vorteilhaften Ausgestaltung der Erfindung umgreift der Schwimmerkörper das Hohlprofil zumindest teilweise außenseitig. Bei dieser Variante wird die Möglichkeit bereitgestellt, dass der Schwimmerkörper bezogen auf seine Querschnittsfläche maximiert ist.

Gemäß einer weiteren vorteilhaften Ausgestaltung der Erfindung sind mehrere Hohlprofile vorgesehen, die jeweils mittels einer eigenen Verriegelungseinrichtung oder über eine gemeinsame Verriegelungseinrichtung an dem Rohrkörper befestigt sind.

Vorteilhafterweise sind bei dieser Variante mehrere Hohlprofile vorgesehen, die äquidistant voneinander angeordnet sind. Für den Fall, dass bei dieser Variante beispielsweise drei Hohlprofile vorgesehen sind, sind diese etwa um 120° versetzt angeordnet. Für den Fall, dass vier Hohlprofile vorgesehen sind, sind diese vorteilhaft um etwa 90° versetzt angeordnet, usw. Bei dieser Ausführungsform der Erfindung kann die Querschnittsfläche des Schwimmerkörpers ebenfalls maximiert werden.

Gemäß einer weiteren vorteilhaften Ausgestaltung der Erfindung weist das Hohlprofil mehrere Kammern auf. Bei dieser Variante kann beispielsweise wenigstens eine erste Kammer vorgesehen sein, die der Unterbringung von Messelektronik dient. Die Messelektronik kann insbesondere eine Platine sowie zahlreiche darauf angeordnete elektrische Bauelemente, wie z. B. schaltbare Schalter, umfassen.

Gemäß einer Ausgestaltung ist darüber hinaus wenigstens eine zweite Kammer an dem Hohlprofil angeordnet, welche eine Saugleitung bereitstellt.

Die Kammer, in der die Messelektronik angeordnet ist, kann verschlossen oder versiegelt sein, beispielsweise mit einer Vergussmasse befüllt sein, und auf diese Weise insbesondere flüssigkeitsdicht die Messelektronik gegenüber dem Medium abschließen.

Gemäß einer weiteren vorteilhaften Ausgestaltung der Erfindung ist zwischen einer Außenumfangsfläche des Hohlprofils und einer Innenumfangsfläche des Rohrkörpers ein Bewegungsraum für den Schwimmerkörper vorgesehen. Der Schwimmerkörper ist insbesondere entlang der Axialrichtung der Sauglanze verfahrbar angeordnet. Der Bewegungsraum kann auf diese Weise maximiert werden. Dies erleichtert eine sichere unbeeinträchtigte Führung des Schwimmerkörpers innerhalb des Innenraums des Rohrkörpers.

Gemäß einer weiteren vorteilhaften Ausgestaltung der Erfindung betätigt der Schwimmerkörper in unterschiedlichen Axialpositionen unterschiedliche Schalter einer Messelektronik. Die Messelektronik kann die unterschiedlichen Schalterzustände detektieren oder lässt eine solche Detektierung zu. Die Messelektronik kann entweder selbständig und/oder unter Zuhilfenahme einer Steuerung einer Dosiereinrichtung aus den unterschiedlichen Schaltzuständen unterschiedlicher Schalter die Füllhöhe des Mediums in dem Behältnis bestimmen oder berechnen.

Gemäß einer weiteren vorteilhaften Ausgestaltung der Erfindung weist der Schwimmerkörper wenigstens einen Magneten auf. Dies ermöglicht eine besonders einfache Konstruktion eines Schwimmerkörpers einer erfindungsgemäßen Sauglanze.

Gemäß einer weiteren vorteilhaften Ausgestaltung der Erfindung weist die Sauglanze eine obere Anschlagfläche und eine untere Anschlagfläche für den Schwimmerkörper auf. Hierdurch wird ein definierter maximaler Verfahrweg des Schwimmerkörpers bereitgestellt.

Gemäß einer weiteren vorteilhaften Ausgestaltung der Erfindung weist die Sauglanze eine Messelektronik auf, die mit einer Steuerung an die Dosiereinrichtung verbindbar ist. Dies ermöglicht die Übermittlung von Signalen an eine Dosiereinrichtung, die Informationen über den Füllstand des Mediums enthalten, oder aus denen unter Zuhilfenahme der Messelektronik Informationen über den Füllstand des Mediums bestimmt oder hergeleitet werden können.

Weitere Vorteile der Erfindung ergeben sich aus den nicht zitierten Unteransprüchen, sowie anhand der nachfolgenden Beschreibung der in den Figuren dargestellten Ausführungsbeispiele. Darin zeigen:
- Fig. 1: ein erstes Ausführungsbeispiel eines erfindungsgemäßen Dosiersystems mit einer Dosiereinrichtung mit einem Ausführungsbeispiel einer erfindungsgemäßen Sauglanze,
- Fig. 2: in einer vergrößerten teilgeschnittenen Ausschnittsdarstellung in schematischer teilgeschnittener Ansicht etwa gemäß Teilkreis II in Fig. 1 einen Teilbereich der Sauglanze mit einem in seiner Position veränderten Schwimmer in vergrößerter Einzeldarstellung,
- Fig. 3: ein Ausführungsbeispiel einer erfindungsgemäßen Sauglanze in einer Querschnittsdarstellung in teilgeschnittener schematischer Ansicht, etwa entlang Schnittlinie III-III in Fig. 2,
- Fig. 4: ein Ausführungsbeispiel der erfindungsgemäßen Sauglanze in einer perspektivischen, auseinandergezogenen schematischen und nicht maßstäblichen Darstellung, etwa entlang Ansichtspfeil IV in Fig. 4, wobei nur der Rohrkörper und das Hohlprofil, aber nicht der Schwimmerkörper, dargestellt sind,
- Fig. 5: ein weiteres Ausführungsbeispiel einer erfindungsgemäßen Sauglanze in einer Darstellung gemäß Fig. 3 mit einer geometrisch invertierten Anordnung eines Fortsatzes und einer Aufnahme,
- Fig. 6: ein weiteres Ausführungsbeispiel einer erfindungsgemäßen Sauglanze in einer Darstellung gemäß Fig. 5, wobei das Hohlprofil mittels zweier Teilfortsätze an dem Rohrkörper festgelegt ist,
- Fig. 7: ein weiteres Ausführungsbeispiel einer erfindungsgemäßen Sauglanze in einer Darstellung ähnlich eines Teil der Darstellung der Fig. 1, wobei drei Sauganschlussleitungen von der Sauglanze abgehen,
- Fig. 8: das Ausführungsbeispiel der Fig. 7 in einer teilgeschnittenen schematischen Darstellung etwa entlang Schnittlinie VIII-VIII in Fig. 7, in einer Darstellung vergleichbar der Darstellung der Fig. 3,
- Fig. 9: ein weiteres Ausführungsbeispiel einer erfindungsgemäßen Sauglanze in einer schematischen teilgeschnittenen Querschnittsdarstellung ähnlich der Darstellung der Fig. 6,
- Fig. 10: ein weiteres Ausführungsbeispiel einer erfindungsgemäßen Sauglanze in einer Darstellung gemäß Fig. 3, wobei ein mittels einer linear ausgebildeten Verriegelungseinrichtung an dem Rohrkörper verriegeltes Hohlprofil nur eine Kammer - zur Bereitstellung der Saugleitung - aufweist, und in einem der Verriegelungseinrichtung gegenüberliegenden Bereich an der Innenseite des Rohrkörpers eine Aufnahmetasche für eine Leiterplatte einer Messelektronik angeformt ist,
- Fig. 11: in einer Darstellung vergleichbar der Fig. 10 ein weiteres Ausführungsbeispiel einer erfindungsgemäßen Sauglanze, wobei vergleichbar der Anordnung des Ausführungsbeispiels der Fig. 8 drei jeweils über eine eigene Verriegelungseinrichtung mit dem Rohrkörper verriegelten Saugleitungen und eine Messelektronik vorgesehen sind,
- Fig. 12: ein weiteres Ausführungsbeispiel in einer Darstellung gemäß Fig. 10, wobei hier ein erstes Hohlprofil für die Saugleitung und zur Unterbringung der Messelektronik und ein gesondertes Hohlprofil vorgesehen ist, welches über eine gesonderte Verriegelungseinrichtung an dem Rohrkörper verriegelt wird, und
- Fig. 13: ein weiteres Ausführungsbeispiel in einer Darstellung vergleichbar der Darstellung der Fig. 12.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben, dargestellt oder offenbart sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Ausführungsbeispiele erfindungsgemäßer Sauglanzen sind in den Zeichnungen in ihrer Gesamtheit mit dem Bezugszeichen 11 bezeichnet.

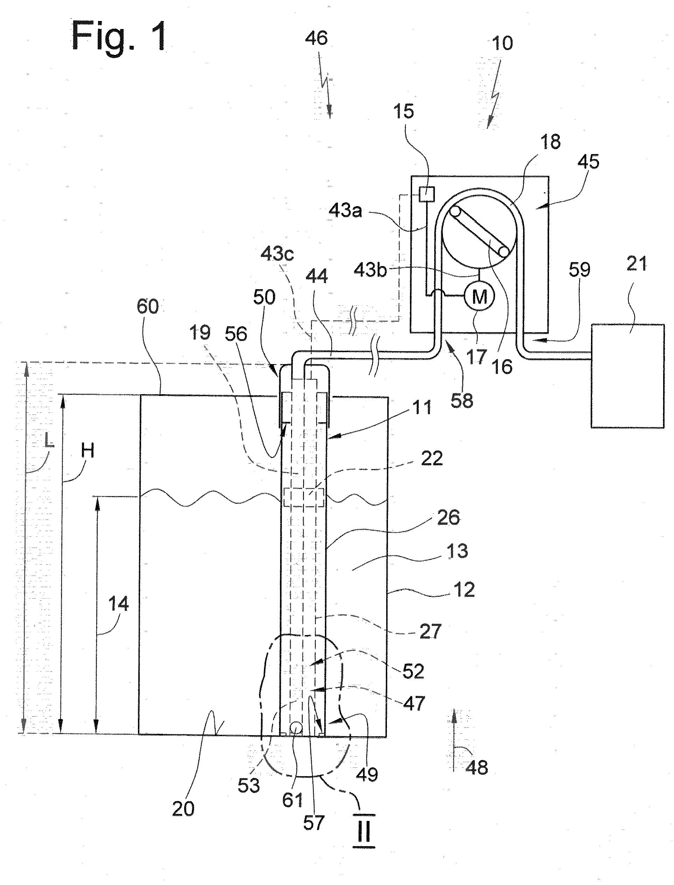

Anhand Fig. 1 soll erläutert werden, wie eine Sauglanze 11 der erfindungsgemäßen Art mit den übrigen Komponenten eines Dosiersystems 46 zusammenwirkt bzw. in ein Dosiersystem 46 eingesetzt werden kann:
Gemäß Fig. 1 ist ein Behältnis 12 gezeigt, in dem sich ein flüssiges Medium 13 befindet. Die schematisch angedeutete Füllhöhe, der sogenannte Füllstand, ist in Fig. 1 mit 14 bezeichnet.

Die Sauglanze 11 weist einen Sauglanzenfuß 49 auf, mit dem sie auf dem Boden 20 des Behältnisses 12 aufgesetzt ist, oder an diesen nahe herangebracht ist.

Die Sauglanze 11 weist darüber hinaus einen Sauglanzenkopf 50 auf, der obenseitig aus dem Deckel 60 des Behältnisses 12 herausragt.

Über eine Saugleitung 44 ist der Sauglanzenkopf 50 mit einer Dosiereinrichtung 10 verbunden. Die Dosiereinrichtung 10 kann beispielsweise, wie schematisch in Fig. 1 dargestellt, eine Schlauchpumpe 45 umfassen. Auch andere Pumpenarten, z. B. Kreiselpumpen, Membranpumpen etc., kommen erfindungsgemäß in Betracht.

Die Dosiereinrichtung 10 dient dazu, das Medium 13 aus dem Behältnis 12 zu entnehmen, und einem Zielgerät 21 zuzuführen. Das Zielgerät 21 kann z. B. eine Waschmaschine oder eine Geschirrspülmaschine sein, oder ein anderes Zielgerät oder Zielgefäß, zu dem das Medium 13 hin gefördert werden soll.

Angemerkt sei, dass die Dosiereinrichtung 10 - was in den Figuren nicht dargestellt ist - eingangsseitig auch mit mehreren Behältnissen verbunden sein kann, in denen gleiche oder unterschiedliche Medien angeordnet sein können. Auch können an eine Dosiereinrichtung 10 mehrere Zielgeräte angeschlossen sein, so dass die Dosiereinrichtung 10 dafür sorgt, dass sukzessive aus unterschiedlichen Behältnissen unterschiedliche Medien zu bestimmten Zeitpunkten den unterschiedlichen Zielgeräten zugeführt werden können.

Diesbezüglich wird auch verwiesen auf die eingangs erwähnten Patentanmeldungen und Patente der Anmelder.

Gemäß dem Ausführungsbeispiel der Fig. 1 weist die Dosiereinrichtung 10 eine Steuerung 15 auf, die z. B. von einem Mikroprozessor bereitgestellt sein kann, oder einen Mikroprozessor umfassen kann. Die Steuerung 15 ist über eine elektrische oder elektronische Verbindungsleitung 43a mit einem Motor 17 verbunden. Dieser kann über eine Wirkleitung 43b, z. B. über ein Getriebe oder über einen Keilriemen oder Zahnantrieb oder dergleichen, einen Rotor 16 in Rotation versetzen und antreiben. Der Rotor 16 weist an seinem Ende - wie bei Schlauchpumpen 45 üblich - Walzen auf, die sukzessive propagierende Bereiche der innerhalb der Schlauchpumpe 45 verlaufenden Schlauchabschnitte 18 quetschen und durch das propagierende Quetschen das Medium 13 durch die Schlauchpumpe 45 hindurch, von ihrem Einlass 58 zu ihrem Auslass 59, fördern.

Auf der Saugseite der Schlauchpumpe 45, also stromaufwärts des Einlasses 58, wird insofern ein Unterdruck erzeugt, der über die Saugleitung 44 Medium 13 aus dem Behältnis 12 saugt.

Die Sauglanze 11 kann eine axiale Länge L aufweisen, die der Höhe H des Behältnisses 12 entspricht oder nahezu entspricht oder diese sogar übersteigt. Dabei kann, wie in Fig. 1 dargestellt, der Sauglanzenkopf 50 aus dem Deckel 60 des Behältnisses auch heraustreten.

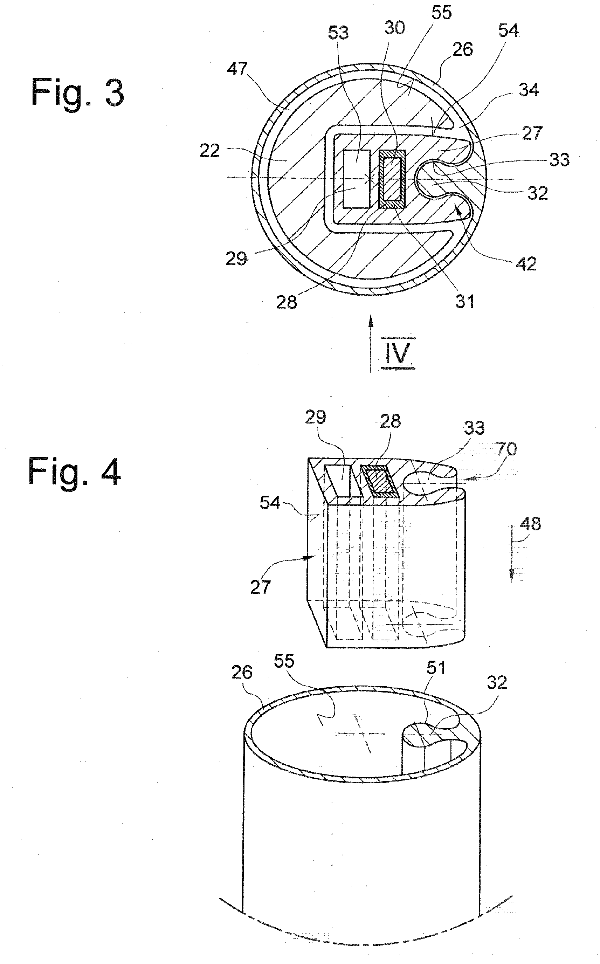

Die Sauglanze 11 umfasst einen Rohrkörper 26, der ausweislich Fig. 3 einen im wesentlichen kreisringförmigen Querschnitt aufweist.

In einem Innenraum 47 des Rohrkörpers 26 sind ein Hohlprofil 27 und ein Schwimmerkörper 22 angeordnet. Das Hohlprofil 27 umfasst bei dem Ausführungsbeispiel der Fig. 3 zwei Kammern, nämlich eine erste Kammer 28 und eine zweite Kammer 29.

Die zweite Kammer 29 stellt eine Saugleitung 19, 53 bereit. Die Kammer 29 ist also als Hohlkammer ausgebildet. Die zweite Kammer 29 kann im Bereich des Sauglanzenfußes 49, wie in Fig. 1 angedeutet, durch eine Ventilkugel 61 verschließbar sein. Sie ist im Bereich des Sauglanzenkopfes 50 mittelbar oder unmittelbar mit der Sauganschlussleitung 44, und damit mit der Schlauchpumpe 45, verbunden.

Die erste Kammer 28 dient zur Aufnahme einer Messelektronik 52.

Hierzu ist in der ersten Kammer 28 eine Platine 30 untergebracht, auf der eine Vielzahl elektronischer Bauelemente angeordnet sein können:

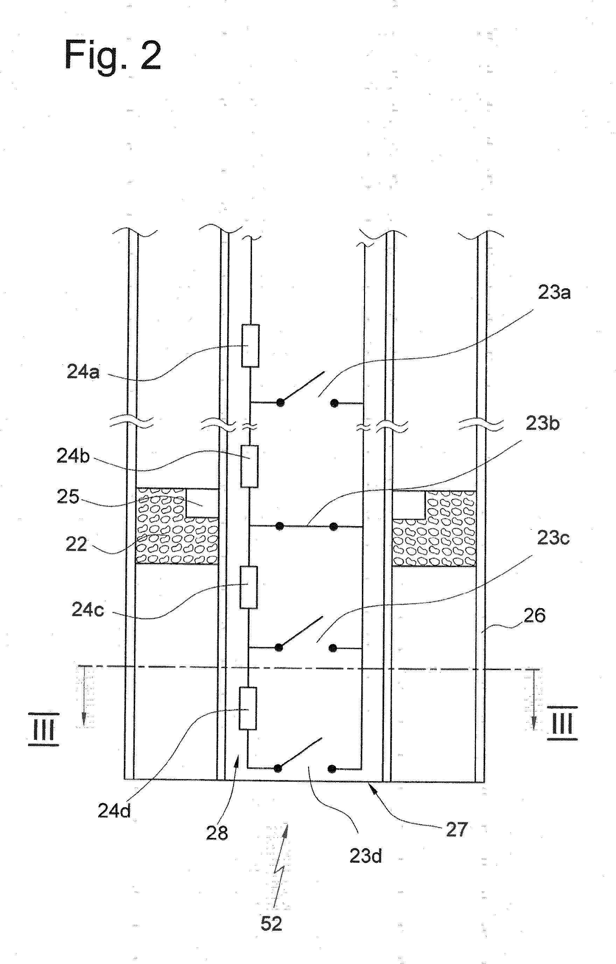

Fig. 2 zeigt die Messelektronik 52 in einer schematischen Schaltbilddarstellung, wobei eine Reihe von Widerständen 24a, 24b, 24c, 24d und eine Reihe von Schaltern 23a, 23b, 23c, 23d angedeutet sind. Nur der Schalter 23b befindet sich in Schließstellung. Die übrigen Schalter 23a, 23c, 23d befinden sich in einer Offenstellung.

Der Schwimmerkörper 22 ist in einem Ringraum oder Bewegungsraum 47 zwischen einer Innenumfangsfläche 55 des Rohrkörpers 26 und einer Außenumfangsfläche 54 des Hohlprofils 27 angeordnet.

Der Schwimmerkörper 22 schwimmt immer auf dem Medium 13 auf, was in der Prinzipdarstellung der Fig. 1 angedeutet ist.

Der Schwimmerkörper 22 weist bei dem Ausführungsbeispiel in den Figuren einen z. B. in Fig. 2 angedeuteten Magneten 25 auf.

Der Schwimmerkörper 22 ist in Axialrichtung 48 verlagerbar. Vorteilhafterweise ist der Schwimmerkörper entlang der gesamten axialen Erstreckung der Sauglanze 11 verfahrbar. Er dient dazu, unterschiedliche Füllstände des Behältnisses 12 anzuzeigen.

In den unterschiedlichen Axialpositionen des Schwimmerkörpers 22 kann der dem Schwimmerkörper 22 zugeordnete Magnet 25 jeweils genau einen der mehreren unterschiedlichen Schalter 23a, 23b, 23c, 23d betätigen.

Fig. 2 zeigt eine Axialposition des Schwimmerkörpers 22, in der der Schalter 23b geschlossen ist.

Die Messelektronik 52 kann insoweit in unterschiedlichen Axialpositionen des Schwimmerkörpers 22 unterschiedliche Schaltzustände oder unterschiedliche Widerstandswerte einnehmen oder ausgeben oder abfragbar vorhalten. Jedenfalls kann eine Information über den Zustand der Messelektronik 52 und damit mittelbar eine Information über den aktuellen Füllstand des Behältnisses 12 an die Steuerung 25 übermittelt werden.

Die Dosiereinrichtung 10 kann diese Information bei der Durchführung von Dosierprozessen berücksichtigen. Beispielsweise können entsprechende Nachbestellbefehle ausgegeben werden, oder den Bedienpersonen entsprechende Füllstände angezeigt werden.

Die Platine 30 kann von einer Vergussmasse 31 umgeben sein, so dass die Kammer 28 vollständig geschlossen ist.

Bei den Ausführungsbeispielen der erfindungsgemäßen Sauglanze 11 ist eine Verriegelungseinrichtung 42 vorgesehen, mit der das Hohlprofil 27 und der Rohrkörper 26 aneinander verriegelbar sind.

Bei dem Ausführungsbeispiel der Fig. 3 weist hierzu das Hohlprofil 27 eine Aufnahme 33 auf. An dem Rohrkörper 26 ist demgegenüber ein Fortsatz 32 angeordnet, der zu der Aufnahme 33 formkomplementär oder im wesentlichen formkomplementär ausgebildet ist. Insbesondere ist vorgesehen, dass der Fortsatz 32 einen Verbreiterungsabschnitt 51 aufweist. Entsprechend der Analogie weist die Aufnahme einen Verengungsabschnitt 70 auf.

Der Verengungsabschnitt 70 ist insoweit die schmalste Stelle der Aufnahme 33. Der Verbreiterungsabschnitt 51 weist eine größere Dimensionierung oder Erstreckung auf, als der Verengungsabschnitt. Durch diese geometrische Ausbildung wird erreicht, dass eine Befestigung von Hohlprofil 27 und Rohrkörper 26 aneinander nur durch eine axiale Steckbewegung möglich ist, und in einer Richtung quer zu der Axialrichtung eine Verriegelung erreicht ist.

Wie Fig. 4 schematisch und nicht maßstäblich deutlich macht, kann das Hohlprofil 27 infolge einer axialen Steck- und Schiebebewegung in den Rohrkörper 26 eingesetzt werden, wobei die zueinander formkomplementären Aufnahme 33 und Fortsatz 32 ineinander gesteckt werden.

Das Hohlprofil 27 ist - genauso, wie der Rohrkörper 26 - ein zylindrischer Körper.

Die Aufnahme 33 und die beiden Kammern 28, 29 erstrecken sich insoweit über die gesamte axiale Länge des Hohlprofils 27.

Infolge eines Ineinandergreifens des Fortsatzes 32 und der Aufnahme 33 entsteht ein Formschluss. Die beiden Elemente 26, 27 werden über diesen Formschluss aneinander verriegelt. Damit ist die Verriegelungseinrichtung 42 insgesamt linear ausgebildet und erstreckt sich - bezogen auf Fig. 1 - vorteilhaft von dem Sauglanzenkopf 50 bis zu dem Sauglanzenfuß 49.

Alternativ erstreckt sich die Verriegelungseinrichtung 42 zumindest von einem Ende Rohrkörpers 26 bis zum anderen Ende des Rohrkörpers 26.

Durch die definierte Positionierung des Hohlprofils 27 relativ zu dem Hohlkörper 26 entlang der gesamten axialen Länge L der Sauglanze 11 oder zumindest entlang einem wesentlichen Teil der axialen Länge L der Sauglanze 11 wird ein klar definierter Bewegungsraum 34 für den Schwimmerkörper 22 bereitgestellt. Der Schwimmerkörper 22 kann sich ungehindert und frei entlang seines Verfahrweges bewegen.

Durch die linienartig ausgebildete Verriegelungseinrichtung 42 wird die Sauglanze 11 in einem besonderen Maße formsteif:
Sie kann trotz ihrer großen axialen Länge von beispielsweise 100 cm, oder sogar noch darüber hinaus, weniger leicht verbiegen.

Bei dem Ausführungsbeispiel der Fig. 3 ist der Schwimmerkörper 22 im wesentlichen hufeisenförmig ausgebildet. Der Schwimmerkörper 22 umfasst hier ein im wesentlichen I-förmiges Profil. Das Profil kann auch als spangenartig bezeichnet werden.

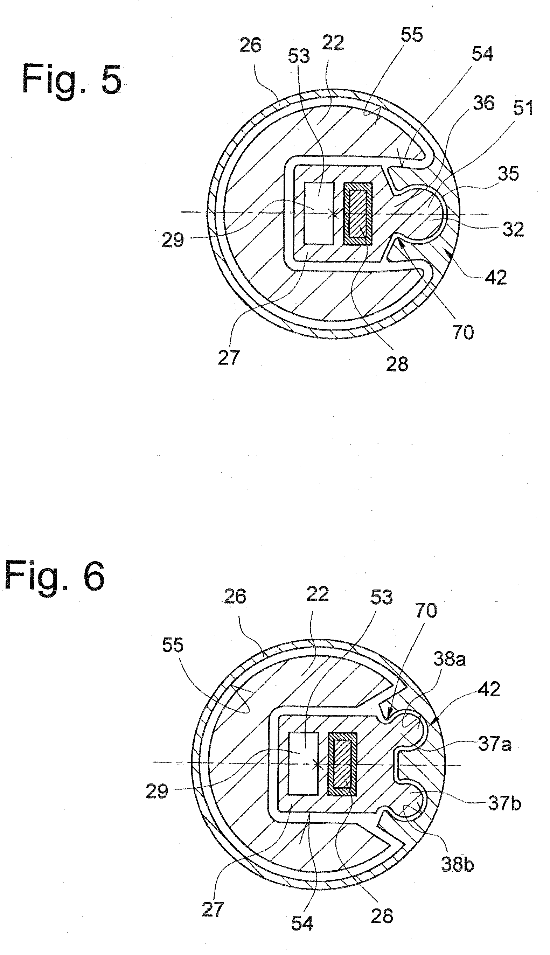

Bei dem Ausführungsbeispiel der Fig. 5 ist eine bezogen auf das Ausführungsbeispiel der Fig. 3 geometrisch invertierte Anordnung getroffen:
Hier ist ein Fortsatz 36 an dem Hohlprofil 27 angeordnet, und eine Aufnahme 35 ist bei dem Ausführungsbeispiel an dem Rohrkörper 26 angeordnet.

Ein weiteres alternatives Ausführungsbeispiel zeigt schematisch Fig. 6: Hier sind an dem Hohlprofil 27 zwei Teilfortsätze 37a, 37b angeordnet, die in entsprechende Teilaufnahmen 38a, 38b an dem Rohrkörper 26 eingreifen.

Die Wahl der Zahl der Teilfortsätze 37 und der Zahl der Teilaufnahmen 38 ist dem Fachmann beliebig zu überlassen.

Gleichermaßen sind von der Erfindung auch nicht dargestellte Ausführungsbeispiele umfasst, die an einem Hohlprofil 27 mehrere Teilaufnahmen und an dem Rohrkörper 26 mehrere Teilfortsätze vorsehen.

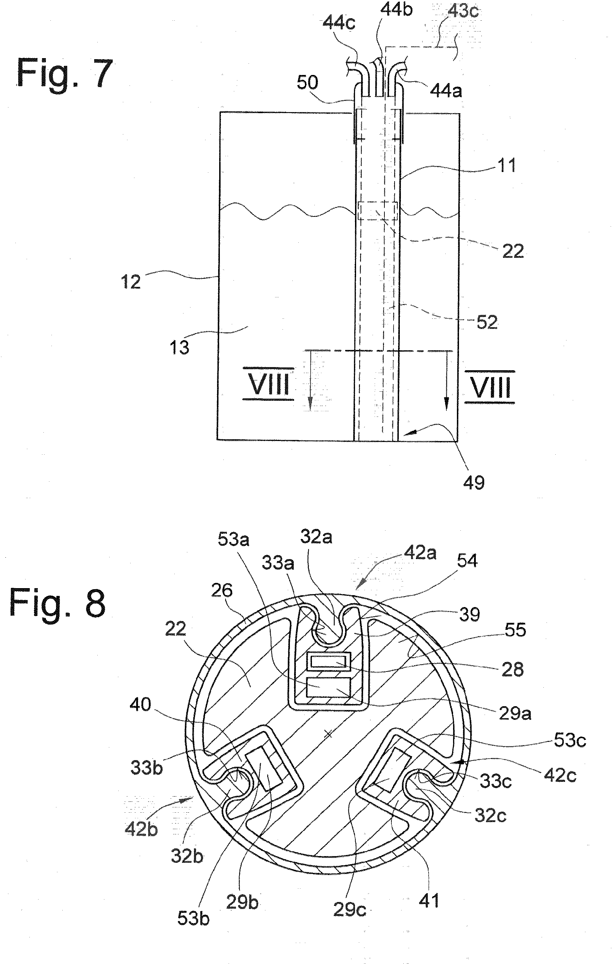

Von der Erfindung sind auch Ausführungsbeispiele von Sauglanzen 11 umfasst, die, wie in dem Ausführungsbeispiel der Fig. 7 dargestellt, im Bereich des Sauglanzenkopfes 50 nicht nur eine Saugleitung 44 zur Verbindung mit einer Dosiereinrichtung 10 umfassen, sondern mehrere Sauganschlussleitungen 44a, 44b, 44c zur Verbindung mit mehreren Dosiereinrichtungen umfassen.

Hier wird insoweit eine Sauglanze 11 bereitgestellt, die in ihrem Innenraum mehrere Saugleitungen 43a, 43b, 43c aufweist.

Die Ausführungsbeispiele erfindungsgemäßer Sauglanzen, die mehrere Saugleitungen aufweisen, können wie folgt ausgebildet sein:
Bei einer ersten Variante sind innerhalb des Rohrkörpers mehrere Hohlprofile 27 angeordnet, die jeweils eine eigene Saugleitung aufweisen. Bei einer Alternative ist innerhalb des Rohrkörpers 26 ein Hohlprofil 27 angeordnet, welches mehrere Saugleitungen aufweist.

Bei dem Ausführungsbeispiel der Fig. 1 ist vorgesehen, dass die Messelektronik 52 über eine Signalleitung 43c mit der Steuerung 15 verbunden ist. Über diese Signalleitung 43c kann die Steuerung 15 also den Füllstand abfragen, bzw. genau genommen einen bestimmten Schaltzustand der Messelektronik 52 abfragen.

Bei dem Ausführungsbeispiel der Fig. 7 und 8, bei dem die Sauglanze 11 über mehrere Sauganschlussleitungen 44a, 44b, 44c mit mehreren Dosiereinrichtungen verbunden ist, kann vorgesehen sein, dass die Sauglanze 11 über nur eine einzige elektronische Verbindungsleitung 43c mit einer einzigen Dosiereinrichtung verbunden ist. Von der Erfindung kann aber auch umfasst sein, wenn die Sauglanze 11 über mehrere elektronische Verbindungsleitungen mit mehreren Dosiereinrichtungen verbunden ist.

Das Ausführungsbeispiel der Fig. 7 und 8 zeigt eine Sauglanze 11, bei der drei Profile 39, 40, 41 vorgesehen sind.

Das erste Profil 39 entspricht in seinem Aufbau grundsätzlich dem Profil 27 gemäß Fig. 3, und weist zwei Kammern 28, 29a auf.

Die Sauglanze 11 gemäß den Fig. 7 und 8 weist zusätzlich zwei weitere Profile 40 und 41 auf, die jeweils nur eine Hohlkammer 29b, 29c umfassen, die als Saugleitung 53b, 53c dient.

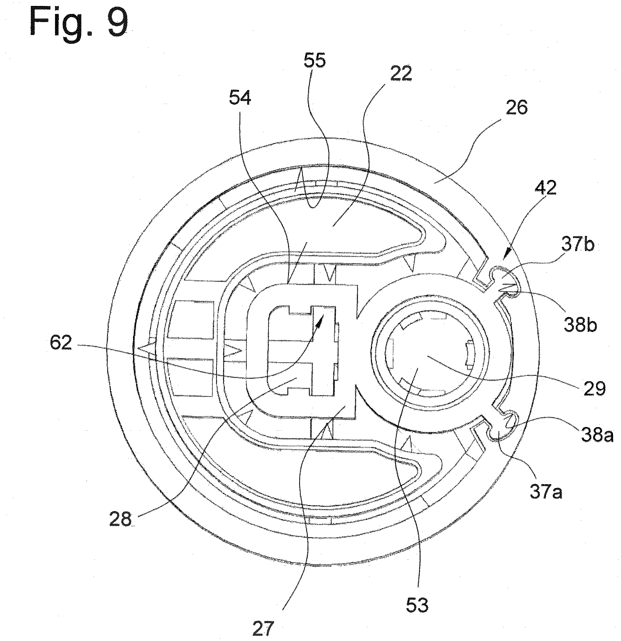

Ein weiteres Ausführungsbeispiel zeigt Fig. 9:
Hier ist deutlich, dass die Kammer 29 zur Bereitstellung einer Saugleitung 53 vorzugsweise einen kreisrunden Querschnitt aufweist. Bei dem Ausführungsbeispiel der Fig. 9 sind zwei Teilfortsätze 37a, 37b vorgesehen, die pilzkopfartig verbreitert sind, und in den entsprechenden Teilaufnahmen 38a, 38b in den Rohrkörper 26 eingreifen.

Die Kammer 28 zur Aufnahme der Messelektronik 52 weist bei dem Ausführungsbeispiel der Fig. 9 eine Nutanordnung 62 auf, in die die in Fig. 9 nicht dargestellte Platine eingeschoben werden kann, und auf diese Weise eine besonders einfache und vorteilhafte sowie präzise Befestigung der Messelektronik 52 in der zugehörigen Kammer 28 erlaubt.

Eine Dosiereinrichtung 46 der erfindungsgemäßen Art kann gemäß Fig. 1 nur eine einzige Sauglanze 11 umfassen. Von der Erfindung sind auch Dosiersysteme 46 umfasst, die eine Mehrzahl von Sauglanzen 11 umfassen.

Bei dem Ausführungsbeispiel der Fig. 1 ist angedeutet, dass der Schwimmerkörper 22 zwischen einer unteren Anschlagfläche 57 und einer oberen Anschlagfläche 56 verlagerbar ist.

Die Ausführungsbeispiele zeigen Sauglanzen 11, die einen Schwimmerkörper 22 umfassen, der entlang eines Großteils oder entlang nahezu der gesamten axialen Länge L der Sauglanze 11 verlagerbar sind.

Von der Erfindung sind aber auch nicht dargestellte Sauglanzen umfasst, bei denen ein Schwimmerkörper oder auch mehrere Schwimmerkörper vorgesehen sind, die jeweils nur über einen Bruchteil der axialen Länge der Sauglanze 11 verlagerbar sind. Bei dem zuletzt beschriebenen Ausführungsbeispiel kann eine Vielzahl von Anschlagflächen für die unterschiedlichen Schwimmerkörper vorgesehen sein.

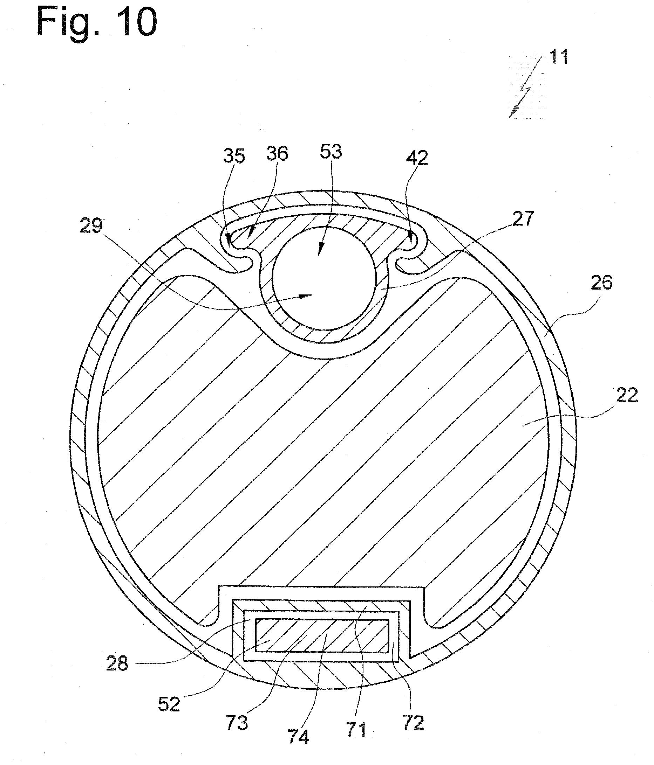

Gemäß Fig. 10 ist ein Ausführungsbeispiel der Sauglanze 11 in einer Querschnittsdarstellung vergleichbar der Fig. 3 dargestellt:
Hier ist das Hohlprofil 27 mit nur einer Hohlkammer 29 ausgestattet, die die Saugleitung 53 bereitstellt. Die Verriegelungseinrichtung 42 ist bei diesem Ausführungsbeispiel geringfügig unterschiedlich ausgebildet:
Eine Aufnahme 35 ist an der Innenwandung des Rohrkörpers 26 angeordnet, und ein Fortsatz 36, also eine Art Verbreiterungsabschnitt, gebildet von Teil-Fortsätzen, ist an dem Hohlprofil 27 angeordnet.

Des weiteren ist an der Innenseite des Rohrkörpers 26 ein Profil 71 mit angeformt, welches einen Aufnahmeraum 72 oder eine Kammer 28 zur Aufnahme der Messelektronik 52 ausbildet. Die Messelektronik 52 umfasst insbesondere eine lediglich schematisch dargestellte Platine 73 und darauf angebrachte, in Fig. 10 nicht dargestellte, elektronische Bauelemente 74. Die Messelektronik 52 kann ebenfalls in Axialrichtung in die Kammer 28 eingesetzt und dort untergebracht werden.

Bei dem Ausführungsbeispiel der Fig. 10 sind das Hohlprofil 27 und die Messelektronik 52 etwa 180° gegenüberliegend angeordnet.

Auch andere relative Positionierungen sind denkbar und von der Erfindung umfasst.

Bei dem Ausführungsbeispiel der Fig. 10 weist der Schwimmerkörper 22 eine Kontur auf, die nach Art eines Fledermausflügels - eine Art Batman-Struktur - ausgebildet ist.

Durch die Befestigung der Messelektronik 52 an dem Rohrkörper 26 - gesondert von dem Hohlprofil 27 - kann z. B. auch die Fläche des Schwimmerkörpers 22 vergrößert werden.

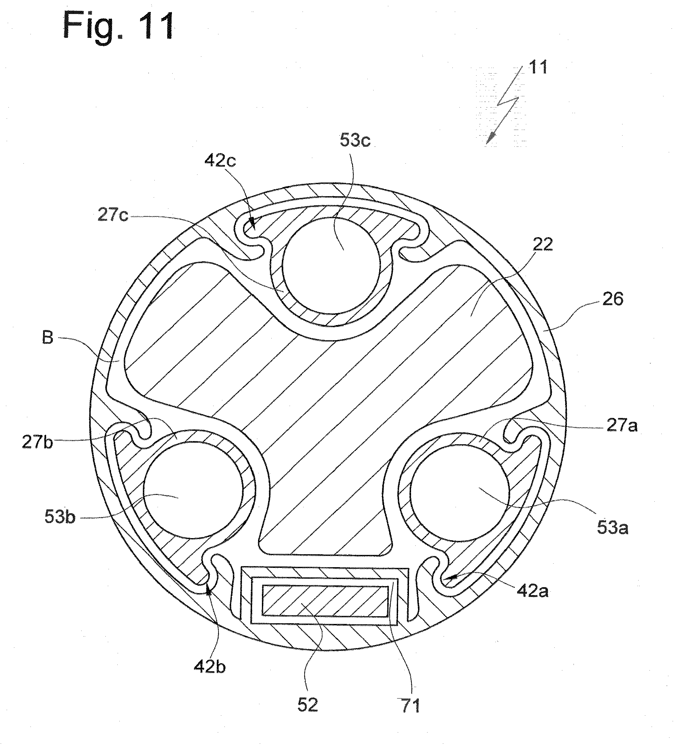

Bei dem Ausführungsbeispiel der Fig. 11 ist eine ähnliche Struktur, wie bei dem Ausführungsbeispiel der Fig. 10 getroffen:
Hier sind drei Hohlprofile 27a, 27b, 27c jeweils 120° umfangsversetzt mittels gesonderter Verriegelungseinrichtungen 42a, 42b, 42c an dem Rohrkörper 26 festgelegt.

Wiederum ist - vergleichbar der Darstellung des Ausführungsbeispiels der Fig. 8 - nur eine Messelektronik 52 vorgesehen.

Der Schwimmerkörper 22 ist bei dem Ausführungsbeispiel der Fig. 11 nach Art eines dreiblättrigen Kleeblatts ausgebildet. Der Schwimmerkörper umfasst drei lappenförmige Bereiche, die sich jeweils zwischen zwei der Hohlkammerprofile 27a, 27b, 27c hinein erstrecken.

Angemerkt sei, dass jeweils zwischen der Außenkontur des Schwimmerkörpers 22 und der Innenkontur des Rohrkörpers 26 bzw. der Innenkontur der Hohlkammerprofile 27a, 27b, 27c ein Bewegungsraum B dargestellt ist, der eine Bewegung des Schwimmers 22 relativ zu dem Rohrkörper 26 ermöglicht.

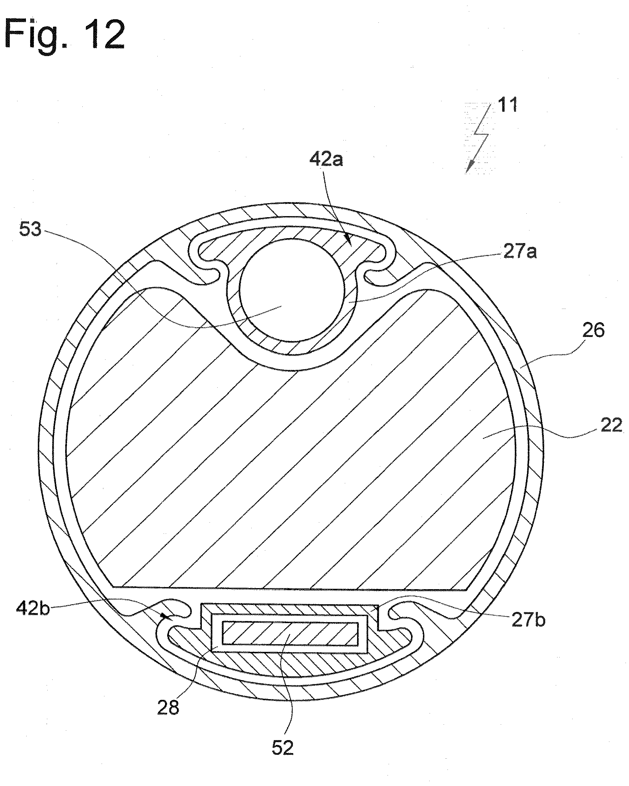

Fig. 12 zeigt ein weiteres Ausführungsbeispiel einer erfindungsgemäßen Sauglanze in einer Darstellung vergleichbar der Fig. 10:
Auch hier erfolgt eine Unterbringung der Messelektronik 52 gesondert von dem Hohlprofil 27a, welches die Saugleitung 53 bereitstellt:
Bei dem Ausführungsbeispiel der Fig. 12 ist ein erstes Hohlkammerprofil 27a über eine Verriegelungseinrichtung 42a an dem Rohrkörper 26 festgelegt. Das erste Hohlkammerprofil 27a stellt die Saugleitung 53 bereit.

Zusätzlich ist ein zweites Hohlkammerprofil 27b über eine zweite Verriegelungseinrichtung 42b an dem Rohrkörper 26 festgelegt:
Das zweite Hohlkammerprofil 27b stellt die Hohlkammer 28 zur Aufnahme der Messelektronik 52 bereit. Die Messelektronik 52 kann wiederum eine Platine und darauf angeordnete elektronische Bauelemente umfassen.

Der Schwimmerkörper 22 weist bei dem Ausführungsbeispiel der Fig. 12 eine geänderte Kontur auf, und umfasst nur noch zwei lappenförmige Bereiche.

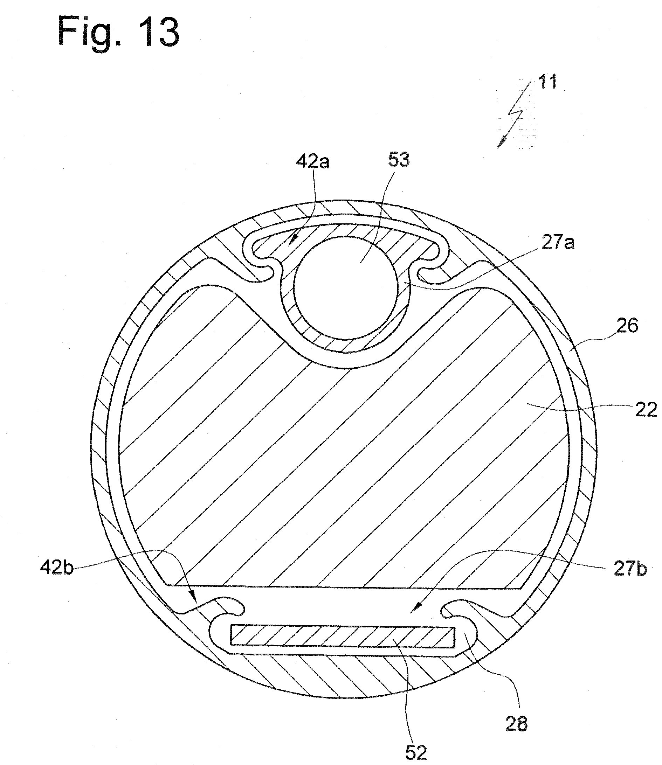

Noch ein weiteres Ausführungsbeispiel einer erfindungsgemäßen Sauglanze zeigt schließlich Fig. 13:
Dieses Ausführungsbeispiel entspricht von seinen Grundzügen her der Darstellung des Ausführungsbeispiels der Fig. 12:
Bei dem Ausführungsbeispiel der Fig. 13 ist ein Hohlprofil 27a über eine erste Verriegelungseinrichtung 42a an dem Rohrkörper 26 befestigt. Das erste Hohlkammerprofil 27a stellt eine Saugleitung 53 bereit.

Von dem ersten Hohlkammerprofil 27a gesondert ist über eine Verriegelungseinrichtung 42b ein zweites Hohlkammerprofil 27b angebracht, welches aber bei dem Ausführungsbeispiel der Fig. 13 - im Unterschied zu dem Ausführungsbeispiel der Fig. 12 - als offene Hohlkammer 28 ausgebildet ist:
Hier wird von dem offenen Hohlkammerprofil 27b eine offene Aufnahmekammer 28 bereitgestellt, die ebenfalls zur Aufnahme der Messelektronik 52 dient. Die Kammer 28 ist also gegenüber dem Medium nicht geschlossen, mit der Folge, dass das Medium mit der Messelektronik 52 in Kontakt treten oder diese benetzen kann.

Die Messelektronik 52 kann bei diesem Ausführungsbeispiel mit einer besonderen Beschichtung versehen sein, insbesondere mit einer Antihaft-Beschichtung, wie sie beispielsweise bei der deutschen Patentanmeldung DE 10 2018 106 045 A1 der Anmelder beschrieben ist.

Bei diesem Ausführungsbeispiel dient die Verriegelungseinrichtung 42b gemäß Fig. 13 der Halterung und Festlegung und Verriegelung der Messelektronik 52.

Auch bei dem Ausführungsbeispiel der Fig. 13 ist die Verriegelungseinrichtung 42b derartig ausgestaltet, dass die Messelektronik 52 im montierten Zustand unverlierbar an dem Rohrkörper 26 gehalten ist.

## Patentansprüche

1. Sauglanze (11) zur Entnahme eines flüssigen Mediums (13) aus einem Behältnis (12), umfassend einen Sauglanzenfuß (49) zum Heransetzen an einen Boden (20) des Behältnisses und einen Sauglanzenkopf (50) zur Verbindung mit einer Dosiereinrichtung (10), wobei sich zwischen dem Sauglanzenkopf und dem Sauglanzenfuß in Axialrichtung (48) ein Rohrkörper (26) erstreckt, in dessen Innenraum (47) ein Schwimmerkörper (22) angeordnet ist,
**dadurch gekennzeichnet, dass** im Innenraum (47) des Rohrkörpers (26) ein Hohlprofil (27) angeordnet ist,
wobei das Hohlprofil (27) mittels einer linienartig ausgebildeten, sich in Axialrichtung erstreckenden Verriegelungseinrichtung (42) an dem Rohrkörper (26) befestigt ist.

2. Sauglanze nach Anspruch 1, **dadurch gekennzeichnet, dass** das Hohlprofil (27) infolge einer axialen Steck- oder Schiebebewegung formschlüssig an dem Rohrkörper (26) festlegbar ist.

3. Sauglanze nach Anspruch 1 oder 2, **dadurch gekennzeichnet, dass** die Verriegelungseinrichtung (42) wenigstens einen Fortsatz (32, 36) mit einem Verbreiterungsabschnitt (51) und wenigstens eine zu dem Fortsatz (32, 36) formkomplementäre Aufnahme (33, 35) aufweist.

4. Sauglanze nach Anspruch 3, **dadurch gekennzeichnet, dass** die Aufnahme (35) an dem Rohrkörper (26) angeordnet ist.

5. Sauglanze nach Anspruch 3, **dadurch gekennzeichnet, dass** die Aufnahme (33) an dem Hohlprofil (27) angeordnet ist.

6. Sauglanze nach einem der vorangegangenen Ansprüche, **dadurch gekennzeichnet, dass** der Schwimmerkörper (22) zumindest bereichsweise hufeisenartig ausgebildet ist.

7. Sauglanze nach Anspruch 6, **dadurch gekennzeichnet, dass** der Schwimmerkörper (22) das Hohlprofil (27) zumindest teilweise außenseitig umgreift.

8. Sauglanze nach einem der vorangegangenen Ansprüche, **dadurch gekennzeichnet, dass** mehrere Hohlprofile (39, 40, 41) vorgesehen sind, die jeweils mittels einer eigenen Verriegelungseinrichtung (42a, 42b, 42c) oder über eine gemeinsame Verriegelungseinrichtung an dem Rohrkörper (26) befestigt sind.

9. Sauglanze nach einem der vorangegangenen Ansprüche, **dadurch gekennzeichnet, dass** das Hohlprofil (27) mehrere Kammern (28, 29) aufweist, wobei wenigstens eine Kammer (28) zur Unterbringung von Messelektronik (52) dient und wobei wenigstens eine Kammer (29) eine Saugleitung (53) bereitstellt.

10. Sauglanze nach Anspruch 9, **dadurch gekennzeichnet, dass** wenigstens eine Kammer (28) verschlossen oder versiegelt ist, insbesondere mit einer Vergussmasse (31) befüllt ist.

11. Sauglanze nach einem der vorangegangenen Ansprüche, **dadurch gekennzeichnet, dass** zwischen einer Außenumfangsfläche (54) des Hohlprofils (27) und einer Innenumfangsfläche (55) des Rohrkörpers (26) ein Bewegungsraum für den Schwimmerkörper (22) vorgesehen ist, wobei der Schwimmerkörper (22) entlang der Axialrichtung (48) verfahrbar angeordnet ist.

12. Sauglanze nach Anspruch 11, **dadurch gekennzeichnet, dass** der Schwimmerkörper (22) in unterschiedlichen Axialpositionen unterschiedliche Schalter (23a, 23b, 23c) einer Messelektronik (52) betätigt.

13. Sauglanze nach einem der vorangegangenen Ansprüche, **dadurch gekennzeichnet, dass** der Schwimmerkörper (22) wenigstens einen Magneten (25) aufweist.

14. Sauglanze nach einem der vorangegangenen Ansprüche, **dadurch gekennzeichnet, dass** die Sauglanze (11) eine obere Anschlagfläche (56) und eine untere Anschlagfläche (57) für den Schwimmerkörper aufweist.

15. Sauglanze nach einem der vorangegangenen Ansprüche, **dadurch gekennzeichnet, dass** die Sauglanze eine Messelektronik (52) aufweist, die mit einer Steuerung (15) einer Dosiereinrichtung (10) verbindbar ist.

## Claims

1. Suction lance (11) for removing a liquid medium (13) from a container (12), comprising a suction lance foot (49) to be set on a base (20) of the container, and a suction lance head (50) to connect to a dosing device (10), wherein a tubular body (26) extends in the axial direction (48) between the suction lance head and the suction lance foot, in the interior (47) of which a float body (22) is arranged,
**characterised in that** a hollow profile (27) is arranged in the interior (47) of the tubular body (26),
wherein the hollow profile (27) is fastened to the tubular body (26) by means of a linear locking device (42) which extends in the axial direction.

2. Suction lance according to claim 1, **characterised in that** the hollow profile (27) can be fixed to the tubular body (26) in a form-fit manner due to an axial plugging movement or sliding movement.

3. Suction lance according to claim 1 or 2, **characterised in that** the locking device (42) has at least one extension (32, 36) having a widening portion (51) and at least one receptacle (33, 35) formed with a complementary shape to the extension (32, 36).

4. Suction lance according to claim 3, **characterised in that** the receptacle (35) is arranged on the tubular body (26).

5. Suction lance according to claim 3, **characterised in that** the receptacle (33) is arranged on the hollow profile (27).

6. Suction lance according to one of the preceding claims, **characterised in that** the float body (22) is at least partially horseshoe-shaped.

7. Suction lance according to claim 6, **characterised in that** the float body (22) at least partially surrounds the outside of the hollow profile (27).

8. Suction lance according to one of the preceding claims, **characterised in that** several hollow profiles (39, 40, 41) are provided, which are respectively fastened to the tubular body (26) by means of their own locking device (42a, 42b, 42c) or via a shared locking device.

9. Suction lance according to one of the preceding claims, **characterised in that** the hollow profile (27) has several chambers (28, 29), wherein at least one chamber (28) serves to accommodate measurement electronics (52), and wherein at least one chamber (29) provides a suction conduit (53).

10. Suction lance according to claim 9, **characterised in that** at least one chamber (28) is locked or sealed, in particular filled with a casting compound (31).

11. Suction lance according to one of the preceding claims, **characterised in that** a movement chamber for the float body (22) is provided between an outer peripheral surface (54) of the hollow profile (27) and an inner peripheral surface (55) of the tubular body (26), wherein the float body (22) is arranged such that it can be moved along the axial direction (48).

12. Suction lance according to claim 11, **characterised in that** the float body (22) is operated in different axial positions of different switches (23a, 23b, 23c) of measurement electronics (52).

13. Suction lance according to one of the preceding claims, **characterised in that** the float body (22) has at least one magnet (25).

14. Suction lance according to one of the preceding claims, **characterised in that** the suction lance (11) has an upper stop surface (56) and a lower stop surface (57) for the float body.

15. Suction lance according to one of the preceding claims, **characterised in that** the suction lance has measurement electronics (52), which can be connected to a controller (15) of a dosing device (10).

## Revendications

1. Lance d'aspiration (11) pour prélever un milieu liquide (13) à partir d'un récipient (12), comprenant un pied de lance d'aspiration (49) destiné à être appliqué contre le fond (20) du récipient, et une tête de lance d'aspiration (50) destinée à être connectée à un dispositif de dosage (10), un corps tubulaire (26), dans l'espace intérieur (47) duquel un flotteur (22) est agencé, s'étendant dans la direction axiale (48) entre la tête de lance d'aspiration et le pied de lance d'aspiration,
**caractérisée en ce qu'**un profilé creux (27) est agencé dans l'espace intérieur (47) du corps tubulaire (26), le profilé creux (27) étant attaché au corps tubulaire (26) par l'intermédiaire d'un dispositif de verrouillage de forme linéaire (42) qui s'étend dans la direction axiale.

2. Lance d'aspiration selon la revendication 1, **caractérisée en ce que** le profilé creux (27) peut être attaché au corps tubulaire (26) par un engagement positif par suite d'un déplacement axial d'emboîtement ou de coulissement.

3. Lance d'aspiration selon la revendication 1 ou 2, **caractérisée en ce que** le dispositif de verrouillage (42) comporte au moins une protubérance (32, 36) qui présente une partie d'élargissement (51) et au moins un logement (33, 35) de forme complémentaire à celle de la protubérance (32, 36).

4. Lance d'aspiration selon la revendication. 3, **caractérisée en ce que** le logement (35) est agencé sur le corps tubulaire. (26).

5. Lance d'aspiration selon la revendication 3, **caractérisée en ce que** le logement (33) est agencé sur le profilé creux (27).

6. Lance d'aspiration selon l'une quelconque des revendications précédentes, **caractérisée en ce que** le flotteur (22) est en forme de fer à cheval au moins par endroits.

7. Lance d'aspiration selon la revendication 6, **caractérisée en ce que** le flotteur (22) entoure au moins partiellement le profilé creux (27) sur le côté extérieur.

8. Lance d'aspiration selon l'une quelconque des revendications précédentes, **caractérisée en ce qu'**il comprend une pluralité de profilés creux (39, 40, 41) qui sont chacun attachés au corps tubulaire (26) par l'intermédiaire d'un dispositif de verrouillage propre (42a, 42b, 42c) ou par l'intermédiaire d'un dispositif de verrouillage commun.

9. Lance d'aspiration selon l'une quelconque des revendications précédentes, **caractérisée en ce que** le profilé creux (27) comprend plusieurs chambres (8, 29), dans laquelle au moins une chambre (28) sert de logement au système électronique de mesure (52) et au moins une chambre (29) fournit une conduite d'aspiration (53).

10. Lance d'aspiration selon la revendication 9, **caractérisée en ce qu'**au moins une chambre (28) est fermée ou scellée, en particulier est remplie d'une masse de scellement (31).

11. Lance d'aspiration selon l'une quelconque des revendications précédentes, **caractérisée en ce qu'**un espace de déplacement pour le flotteur (22) est prévu entre une surface périphérique extérieure (54) du profilé creux (27) et une surface périphérique intérieure (55) du corps tubulaire (26), le flotteur (22) étant agencé de manière à pouvoir se déplacer le long de la direction axiale (48).

12. Lance d'aspiration selon la revendication 11, **caractérisée en ce que** le flotteur (22) actionne différents commutateurs (23a, 23b, 23c) d'une électronique de mesure (52) dans différentes positions axiales.

13. Lance d'aspiration selon l'une quelconque des revendications précédentes, **caractérisée en ce que** le flotteur (22) comprend au moins un aimant (25).

14. Lance d'aspiration selon l'une quelconque des revendications précédentes, **caractérisée en ce que** la lance d'aspiration (11) présente une surface de butée supérieure (56) et une surface de butée inférieure (57) pour le flotteur.

15. Lance d'aspiration selon l'une quelconque des revendications précédentes, **caractérisée en ce que** la lance d'aspiration comprend une électronique de mesure (52) qui peut être connecté à une commande (15) d'un dispositif de dosage (10).
